# EUROPÄISCHE PATENTSCHRIFT

(11) **EP 0 280 336 B1**
(45) Veröffentlichungstag und Bekanntmachung des Hinweises auf die Patenterteilung: **25.08.1993**
(21) Anmeldenummer: 88102946.6
(22) Anmeldetag: 27.02.1988
(51) Int. Cl.: B65G 47/06, B65G 35/04, B65G 47/51

(54) **Speichersystem**
Storage system
Système de stockage

(30) Priorität: 27.02.1987 DE 3706493
(43) Veröffentlichungstag der Anmeldung: 31.08.1988
(73) Patentinhaber: FRAUNHOFER-GESELLSCHAFT ZUR FÖRDERUNG DER ANGEWANDTEN FORSCHUNG E.V., 80636 München (DE)
(72) Erfinder: Maier, Dieter, Dipl.-Ing., D-7000 Stuttgart 40 (DE); Boley, Dieter, Dipl.-Ing., D-7250 Leonberg/Eltingen (DE)
(74) Vertreter: Münich, Wilhelm, Dr.

(56) Entgegenhaltungen:
- EP-A- 0 079 425
- WO-A-86/00778
- DE-A- 3 438 123
- FR-A- 2 537 952
- GB-A- 2 091 198
- PATENT ABSTRACTS OF JAPAN, Band 10, Nr. 88 (M-467)[2145], 5. April 1986; & JP-A-60 228 321 (MATSUSHITA DENKO K.K.) 13-11-1985
- PATENT ABSTRACTS OF JAPAN, Band 10, Nr. 368 (M-543)[2425], 9. Dezember 1986; & JP-A-61 162 423 (FUJI KIKAI SEIZO K.K.) 23-07-1986

## Beschreibung

Die Erfindung bezieht sich auf ein Speichersystem zum geordneten und positionierten Eingeben, Speichern und Entnehmen von Teilen gemäß dem Oberbegriff des Anspruchs 1.

Derartige Speichersysteme sind zum Speichern von Teilen aller Art, insbesondere aber zum Speichern von biegeschlaffen Teilen sowie von oberflächenempfindlichen, spröden oder leicht brüchigen Teilen geeignet.

Ein Speichersystem gemäß dem Oberbegriff des Patentanspruchs 1 ist aus der GB-A-2 091 198 bekannt. Dieses bekannte Speichersystem weist ein Trägerband auf, das aus einzelnen starren Gliedern besteht, die gelenkig miteinander verbunden sind, und die die zu speichernden Teile aufnehmen. Mit den Enden des Trägerbandes sind zwei Wellen verbunden, die in wenigstens einem Behälter angeordnet sind. Eine Vorschubeinheit schiebt das Trägerband derart vor, daß an einer Be- und Entladestation ein neues Teil gespeichert bzw. entnommen werden kann, und das Trägerband zusammen mit den gespeicherten Teilen von der einen Welle ab- und auf die andere Welle aufgewickelt wird.

Dieses bekannte Speichersystem hat damit den Vorteil, daß das Abrollen des "Trägerband-Wickels" und das sofortige Wiederaufrollen in einem weiteren "Wickel" - anders als beispielsweise das Be- und Enladen von Paletten - nur einfachste rotatorische Bewegungen erfordert und daß darüberhinaus sowohl der Beschick- als auch der Entnahmevorgang leicht automatisierbar sind.

Nachteilig ist jedoch, daß die Speicherkapazität, die im wesentlichen durch die Länge des Trägerbandes gegeben ist, nur schwer zu variieren ist.

Der Erfindung liegt die Aufgabe zugrunde, ein Speichersystem zum geordneten und positionierten Eingeben, Speichern und Entnehmen von auf einem Träger angeordneten Teilen gemäß dem Oberbegriff des Anspruchs 1 derart weiterzubilden, daß die Speicherkapazität leicht variiert werden kann.

Eine erfindungsgemäße Lösung dieser Aufgabe ist im Anspruch 1 angegeben. Weiterbildungen der Erfindung sind in den Patentansprüchen 2 folg. gekennzeichnet.

Erfindungsgemäß weisen die starren Glieder rohrförmige Elemente auf, die zur Variation der Speicherkapazität über von den rohrförmigen Elementen getrennte Verbindungselemente, wie eine Gurtverbindung oder eine Gelenkverbindung gelenkig, aneinander gefügt sind. Durch die erfindungsgemäße Maßnahme, gemäß der das Trägerband aus einzelnen Gliedern besteht, die über Verbindungselemente gelenkig aneinander gefügt werden können, ist es möglich, weitgehend feste Speicherplätze zu schaffen und andererseits die Speicherkapazität beliebig zu variieren.

Das erfindungsgemäße Speichersystem hat dennoch weiter die Vorteile eines gattungsgemäßen Speichersystems:
Das Speichersystem erfordert nur eine einzige Be- und Entladestation, so daß zum Beschicken und Entleeren des Speichersystems keine komplexen Bewegungsabläufe erforderlich sind.

Zum Vorschieben und Wiederaufrollen des Trägerbandes sind vielmehr nur einfachste rotatorische Bewegungen nötig.

Das Speichersystem ist auch zum Speichern unterschiedlicher Teile geeignet, da alle Teile unabhängig von ihrer Größe an der selben Stelle zugeführt und entnommen werden können.

In jedem Wickel sind die zu speichernden Teile von dem Trägerband bzw. der Unterseite des darüber aufgewickelten Teils des Trägerbands flexibel umschlossen, so daß die zu speichernden Teile geschützt sind. Darüberhinaus kann das Trägerband so ausgebildet sein, daß es das geordnete und vereinzelte Speichern der Teile erlaubt (Anspruch 2).

In den Ansprüchen 3 bis 7 sind vorteilhafte Ausbildungen des Antriebsystems für das gesamte Wickel-Speichersystem gekennzeichnet. Dabei ist besonders vorteilhaft, wenn das Antriebssystem in die Belade-/ Entnahmestelle gelegt wird, da dann der Platzbedarf des erfindungsgemäßen Speichersystems weiter verringert und der taktweise Vorschub um jeweils einen Speicherplatz mit einfachen Mitteln sichergestellt wird.

Durch die gezielte Krümmung des Trägerbands im Bereich der Be- und Entladestation (Anspruch 8), die gemäß Anspruch 9 auch durch das Antriebssystem hervorgerufen werden kann, wird die Be- und Entladung des Speichers weiter erleichtert.

Durch die Maßnahmen gemäß den Ansprüchen 10 bis 12 wird sichergestellt, daß der Wickel, der abgerollt wird, immer straff gehalten wird.

Die in den Ansprüchen 13 und 14 gekennzeichneten Merkmale sorgen dafür, daß der Wickel rund ist, so daß eventuelle Beschädigungen der Teile beim Auf- und Abrollen mit Sicherheit vermieden werden.

Darüberhinaus ist das erfindungsgemäße Speichersystem immer dann besonders vorteilhaft, wenn empfindliche Teile gehandhabt werden müssen, da nicht nur die Teile einzeln durch das Trägerband umschlossen sind, sondern auch der gesamte Wickel - im Gegensatz zu Palettenbehältern immer - in einem geschlossenen Behälter untergebracht ist (Anspruch 15). Ein weiterer Schutz der gespeicherten Teile wird durch die im Anspruch 20 gekennzeichnete Weiterbildung erreicht.

Das erfindungsgemäße Speichersystem eignet sich insbesondere für einen modularen Aufbau, bei dem die Behälter des Speichersystems nach dem Beschicken bzw. Enleeren vom eigentlichen Speichersystem abgenommen und durch volle bzw. leere Behälter ersetzt werden können (Anspruch 16).

Die Ansprüche 17 und 18 kennzeichnen Weiterbildungen, die den Entnahmevorgang wesentlich vereinfachen.

In den Ansprüchen 21 ff. sind Maßnahmen beschrieben, die die universelle Verwendbarkeit des erfindungsgemäßen Speichersystems, seine Be- Entladung weiter vereinfachen und darüberhinaus das Speichern unterschiedlichster Teile und den gezielten Zugriff auf diese Teile erlauben.

Die Erfindung wird nachstehend anhand von Ausführungsbeispielen unter Bezugnahme auf die Zeichnung näher beschrieben, in der zeigen:
- Fig. 1a: ein herkömmliches Speichersystem,
- Fig. 1b: ein gattungsgemäßes Wickel-Speichersystem,
- Fig. 2a: einen Wickel eines erfindungsgemäßen Speichersystems im aufgerollten Zustand, und
- Fig. 2b: einen Wickel eines erfindungsgemäßen Speichersystems im ausgerollten Zustand,
- Fig. 3: einen Querschnitt durch einen Wickel-Behälter,
- Fig. 4a und 4b: zwei Ausführungsbeispiele für einen erfindungsgemäßen Taktvorschub.
- Fig. 5a und 5b: zwei Ausführungsbeispiele eines erfindungsgemäßen Wickel-Speichersystems mit einem als Kassette ausgebildeten gemeinsamen Behälter,
- Fig. 6a bis c: eine Weiterbildung mit flexibel aufgehängten Lagerwellen,
- Fig. 7a und 7b: einen Vergleich des Speichervolumens.

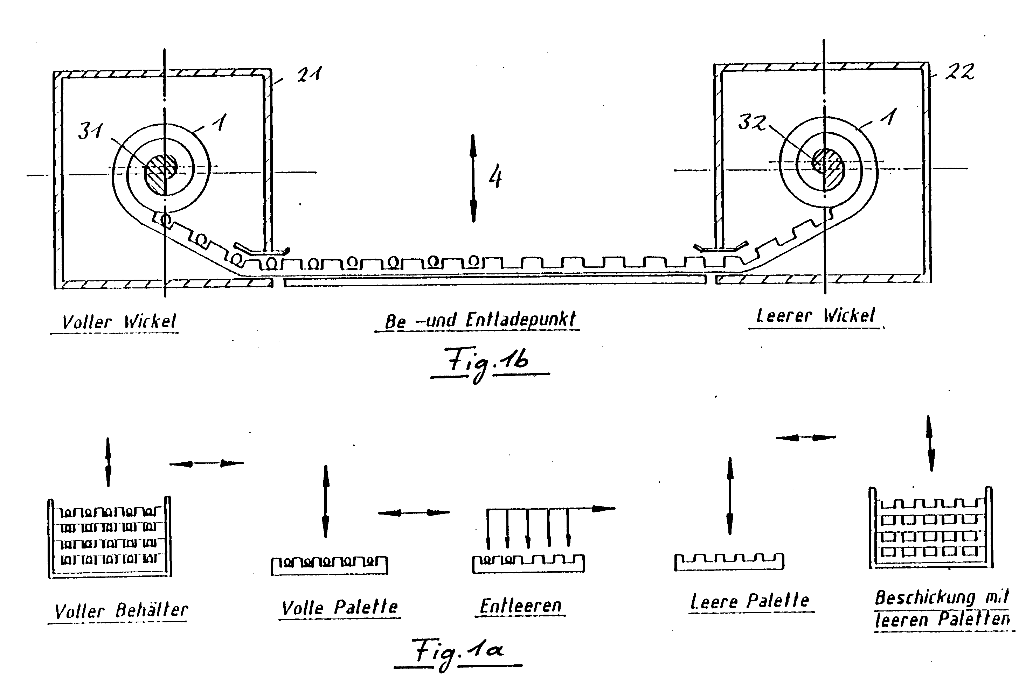

Fig. 1a zeigt ein bekanntes Speichersystem, bei dem Paletten übereinander in einem Behälter gelagert sind. Zum Entnehmen der Teile ist zunächst eine volle Palette aus dem Behälter zu entnehmen; anschließend ist die entnommene Palette palettenplatzweise abzuarbeiten und in einem anderen Behälter für leere Paletten unterzubringen.

Damit sind eine Reihe komplizierter Bewegungsabläufe erforderlich.

Bei dem in Fig. 1b gezeigten gattungsgemäßen Wickel-Speichersystem sind dagegen nur einfachste rotatorische Bewegungen erforderlich, mit denen das Trägerband von dem einen Wickel ab- und auf dem anderen Wickel aufgerollt wird.

Hierzu weist das Speichersystem ein Trägerband 1 auf, dessen Enden jeweils mit einer in einem ersten Behälter 21 und einer in einem zweiten Behälter 22 angeordneten Welle 31 bzw. 32 verbunden sind. Durch Aufrollen des Trägerbands 1 auf der Welle 32 und entsprechendes Abrollen von der Welle 31 wird das Trägerband an einer nicht näher dargestellten Be- und Entladestation, die durch einen Pfeil 4 symbolisiert ist, vorbeibewegt, so daß das Beschicken bzw. das Entnehmen vom Trägerband ortsfest erfolgen kann, ohne daß eine variable Positionierung der Entnahmeeinheit erforderlich wäre.

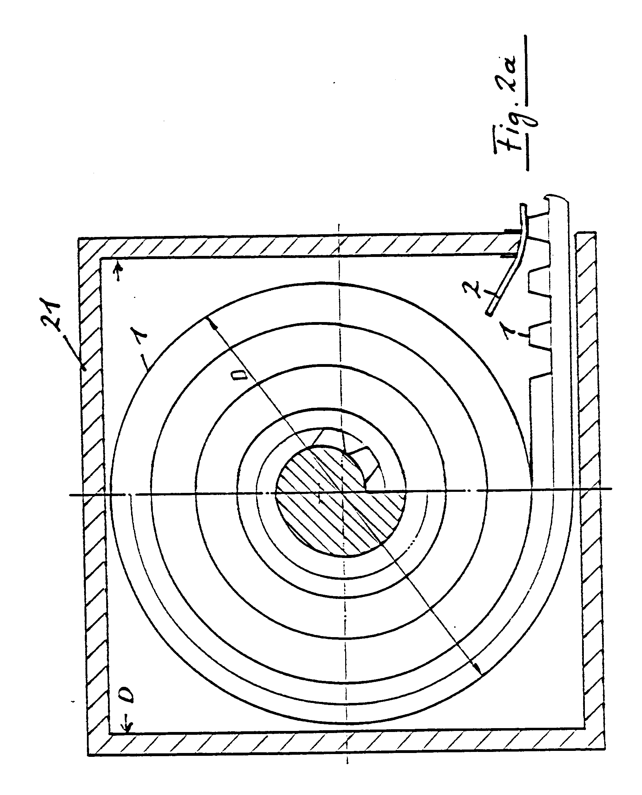

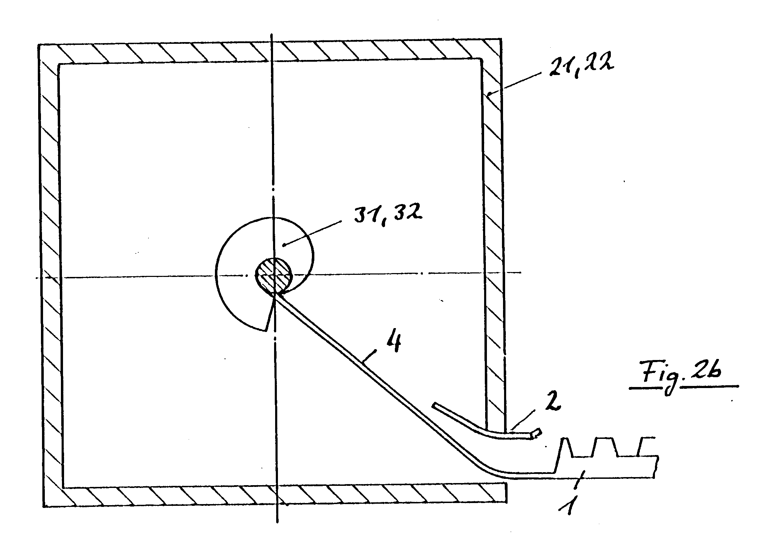

Die Figuren 2a und 2b zeigen einen Behälter, beispielsweise den Behälter 21 einmal mit "vollem Wickel", d. h. aufgerolltem Trägerband und einmal mit abgerolltem Trägerband 1. Deutlich ist zu erkennen, daß die Wellen, in diesem Falle die Welle 31, einen "spiralförmigen Querschnitt" haben, so daß sich ein runder Wickel ergibt. Um das Trägerband vollständig aus dem Behälter ausfahren zu können, ist es vorteilhaft, wenn das Trägerband 1 mit der Welle 31 über ein Ausrollband 4 verbunden ist, das den Abstand zwischen der Öffnung für das Trägerband und der Welle 31 "überbrückt". Ferner ist in der Öffnung des Behälters für das Trägerband eine Führung 3 angeordnet, die ein Herausfallen der gespeicherten Teile verhindert.

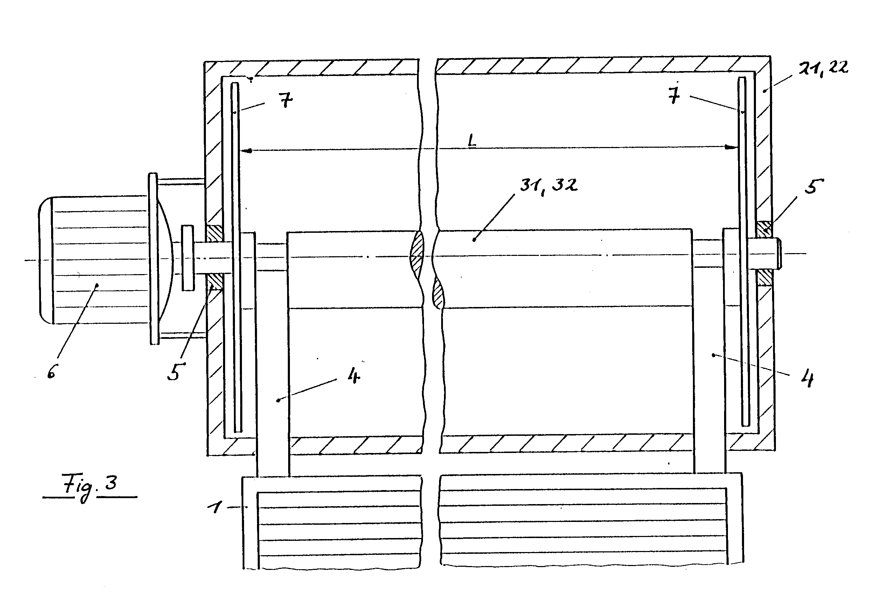

Figur 3 zeigt einen Querschnitt durch einen Behälter eines Wickel-Speichersystems. Die Welle 31 bzw. 32 ist in den Seitenwänden des Behälter-Gehäuses 21 bzw. 22 mittels Lager 5 gelagert und wird von einem Motor 6 angetrieben. Ferner ist zu erkennen, daß Führungsflächen 7 vorgesehen sind, die für ein gleichmäßiges Aufwickeln des Trägerbandes 1 sorgen, das - wie dargestellt - über Ausrollbänder 4 mit der Welle 31 verbunden ist.

Im folgenden sollen die einzelnen Elemente näher erläutert werden.

Der Rahmen des Behälters 1 kann beispielsweise modular aufgebaut sein, d. h. es können Zwischenelemente vorgesehen werden um seine Länge L und seine Breite an ein spezielles Produktspektrum anzupassen.

Die Welle 31 hat - wie bereits ausgeführt - einen spiralförmigen Querschnitt, damit sich ein runder "Wickel" des Trägerbands ergibt. Die Ausrollbänder 4 sind in zwei Aussparungen in der Welle 31 befestigt, so daß das Trägerband 1 ganz aus dem Behälter ausfahren kann und andererseits die Ausrollbänder 4 die Wickelform nicht stören.

Die Führungsfläche 7 an den Enden der Welle sorgen nicht nur für eine Führung des Wickels, sondern schließen auch die Speicherplätze seitlich ab, so daß sich die gespeicherten Teile nicht verschieben können.

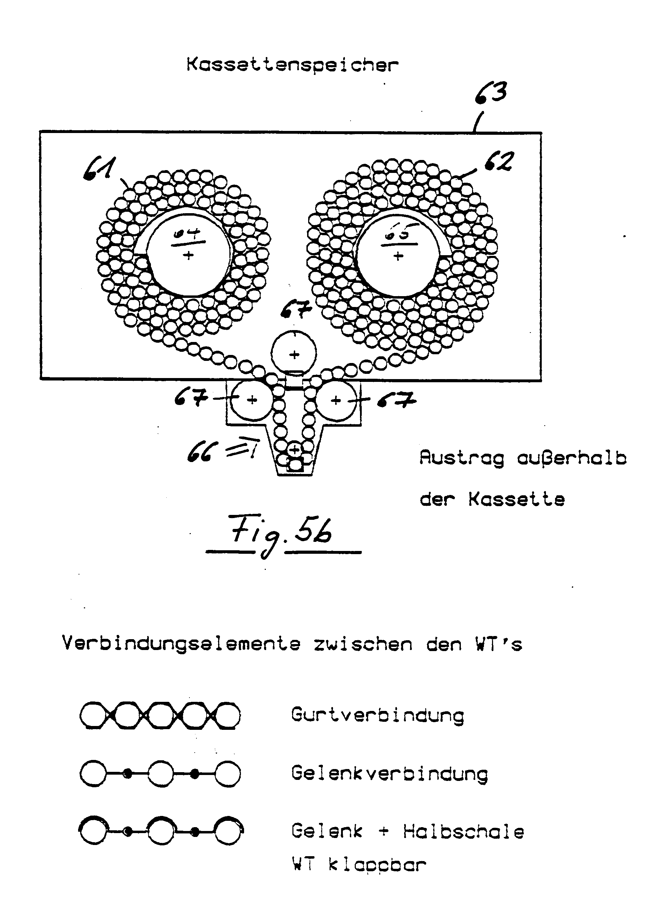

Der Motor 6 ist - wie in Verbindung mit den Figuren 5a und 5b noch erläutert werden wird - lediglich ein Hilfsantrieb, der die Funktion hat, beim Abrollen des Wickels entgegen der Wickelrichtung zu drehen und den Wickel stramm zu halten; beim Aufrollen des Wickels dreht der Hilfsantrieb 6 dagegen in Wickelrichtung und hält so den Wickelstrang.

Dabei ist der Hilfsantrieb 6 so auszulegen, daß die Funktion des Strammhaltens durch den noch zu erläuternden Taktvorschub überwunden werden kann.

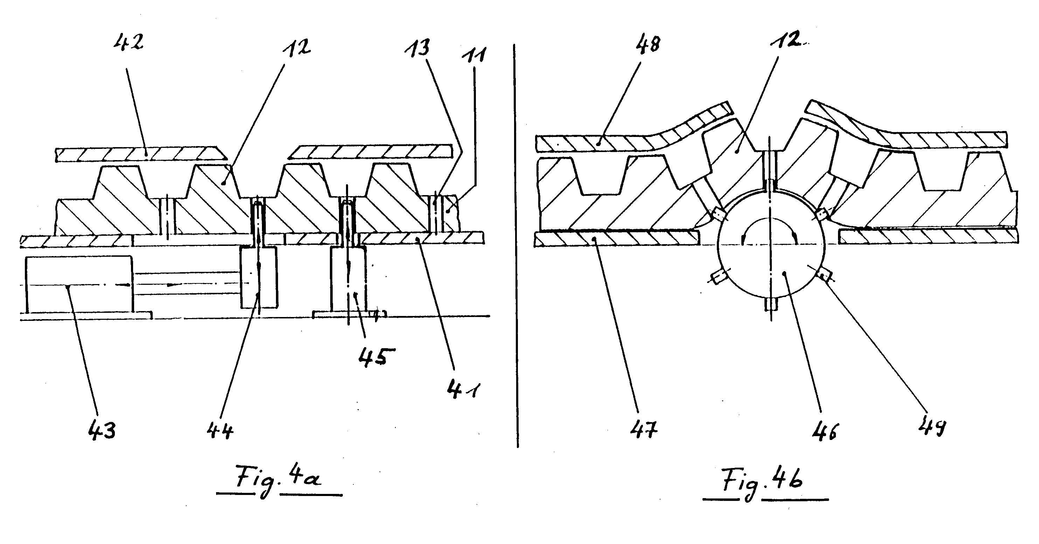

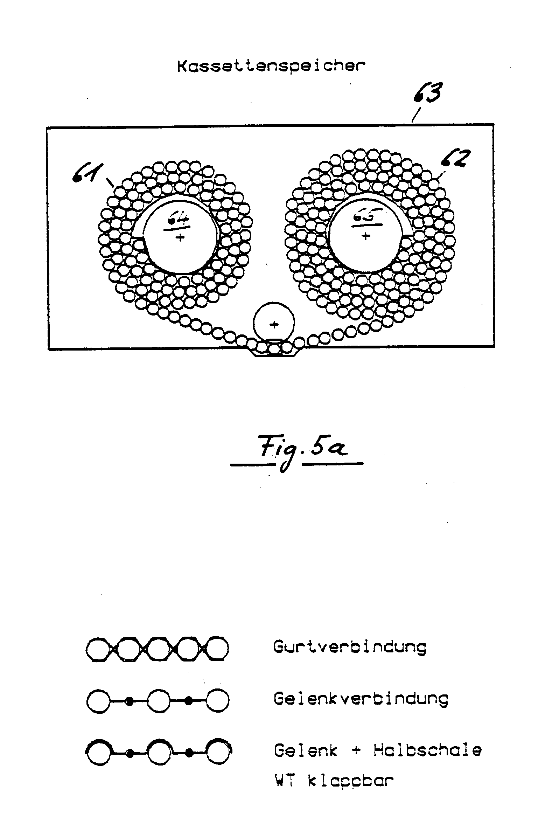

Die Figuren 4a und 4b zeigen zwei mögliche Varianten eines bei einem erfindungsgemäßen Speichersystem einsetzbaren Taktvorschubs.

Bei der in Figur 4a gezeigten Variante besteht der Taktvorschub aus einer Grundplatte 41, einer Deckplatte 42 mit einer Öffnung, die die Entnahme eines einzigen Teils erlaubt, einem Vorschubschlitten 43, einem einschwenkbar angeordneten Stift 44 und einem Haltestift 45. Um einen Taktvorschub auszuführen, fährt der schwenkbare Stift 44 in die Bohrung 13 ein; anschließend fährt der Schlitten 43 um eine Taktstrecke vor, der Haltestift 45 fährt in das Trägerband ein und fixiert das Band. Der Stift 44 fährt wieder aus der Bohrung 13 aus und der Schlitten 43 zurück.

Bei der in Figur 4b gezeigten Antriebsvariante läuft das Grundband 11 über eine Trommel 46, die in einer Aussparung einer Grundplatte 47 angebracht ist. Ferner ist eine Gegenplatte 48 vorgesehen, die der Kontur des Trägerbandes folgt und eine Öffnung aufweist, die wiederum lediglich die Entnahme eines einzigen Teils gestattet. Bei dieser Antriebsvariante ist das Trägerband stets mit den Stiften 49 des Taktvorschubs im Eingriff, der Taktvorschub erfolgt über eine einfach zu realisierende Drehbewegung.

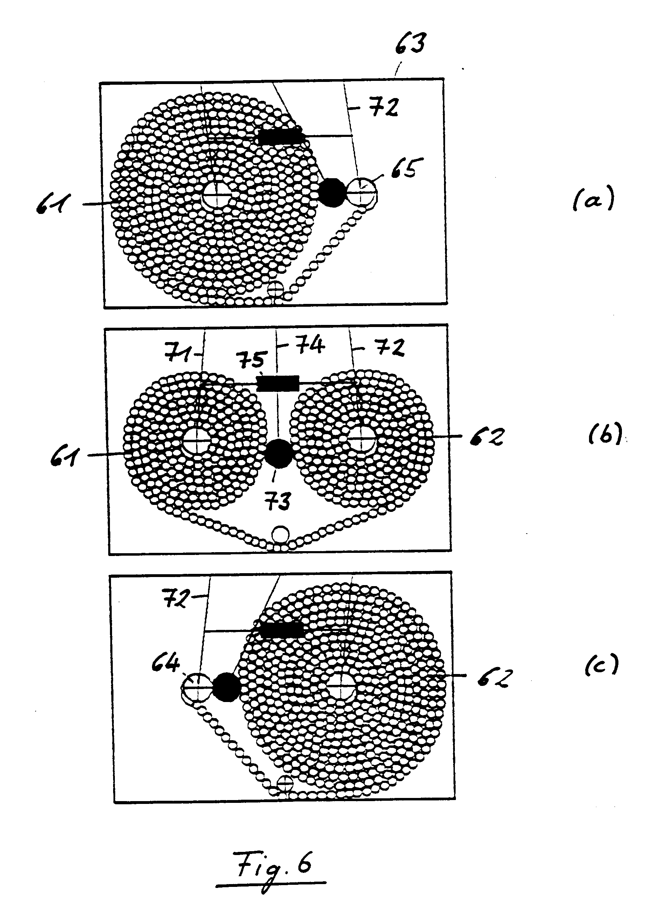

Die Figuren 5a und 5b zeigen ein weiteres Ausführungsbeispiel eines erfindungsgemäßen Speichersystems, bei dem anstelle von zwei Behältern, die die beiden Wickel 61 und 62 aufnehmen, eine Kassette 63 vorgesehen ist. Die Wellen 64 und 65 sind in der Kassette 63 fest angeordnet. Bei dem in Figur 6b gezeigten Ausführungsbeispiel ist im Gegensatz zu dem in Figur 6a gezeigten Ausführungsbeispiel die Beund Entladestation 66 mittels mehrerer Umlenkrollen 67 außerhalb der Kassette angeordnet.

Ferner ist im unteren Teil der Figuren 5a und 5b der erfindungsgemäße Aufbau des Trägerbandes dargestellt. Das Trägerband besteht aus starren Gliedern, die als rohrförmige Elemente aufgebildet sind. Die rohrförmigen Elemente sind zur Variation der Speicherkapazität über von den rohrförmigen Elementen getrennte Verbindungselemente, wie einer Gurtverbindung oder einer Gelenkverbindung gelenkig aneinander gefügt. Dabei ist es bei entsprechender Gestaltung der Gelenke als Halbschalen auch möglich, das rohrförmige Element bzw. den Werkstückträger (WT) klappbar auszugestalten.

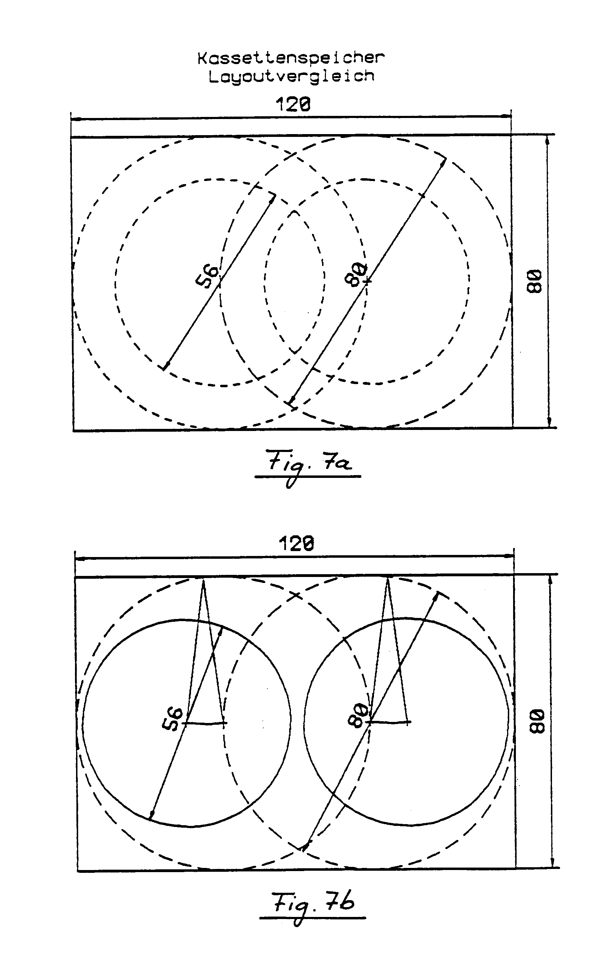

Bei dem in den Figuren 6 gezeigten Ausführungsbeispiel sind im Gegensatz zu dem in den Figuren 5a und 5b dargestellten Ausführungsbeispielen die Wellen 64 und 65 der beiden Wickel 61 und 62 nicht feststehend, sondern verschiebbar an Schwingen 71 und 72 angeordnet. Hierdurch wird, wie in Figur 7a und 7b dargestellt ist, das verfügbare Speichervolumen besser ausgenutzt. Dabei zeigt Figur 7a, daß bei bestimmten Außenmaßen, die beispielhaft in den Figuren als 80 ME (Maßeinheiten) und 120 ME angegeben sind, sich Wickel 61 und 62 mit einem Durchmesser von 56 ME bereits überlappen würden, wenn die Wellen 64 und 65 so angeordnet Sind, daß der größtmögliche Wickeldurchmesser 80 ME beträgt. Bei dem in Figur 7b gezeigten Ausführungsbeispiel, bei dem die Wellen 64 und 65 mittels Schwingen 71 und 72 verschiebbar angeordnet sind, finden dagegen zwei Wickel mit einem Durchmesser von 56 ME noch Platz in der Kassette 63.

In den Figuren 6a bis 6c ist ferner ein als Rolle 73 ausgebildetes Bremselement vorgesehen, das bei verschiebbar aufgehängten Wellen die Umfangsgeschwindigkeit der beiden Wickel beim Auf- bzw. Abrollen einander angleicht und so ein gleichmäßiges Aufrollen und Abrollen der einzelnen Wickel gestattet. Hierzu ist das Bremselement 73 ebenfalls an einer Schwinge bzw. Wippe 74 gelagert, die über eine Feder 75 mit den beiden Schwingen bzw. Lagergestängen 71 und 72 der Wickel 61 und 62 verbunden ist.

Der in den Figuren 5 bis 7 dargestellte "Kassettenspeicher" hat den zusätzlichen Vorteil, daß ein leichter Transport beispielsweise mit einem Gabelstapler oder einem Flurförderfahrzeug möglich ist. Ferner ist durch die geschlossene Einheit nur eine minimale Rüstzeit zur Inbetriebnahme erforderlich. Das Austragen bzw. das Beladen des Speichers kann vorzugsweise durch Verdrehen des Speichers und der Schwerkraft erfolgen.

Darüberhinaus ist es möglich, den Speicher sowohl horizontal als auch vertikal zu betreiben. Ferner kann der Speicher gewendet werden, so daß die Oberseite nach unten kommt und die zuletzt eingegebenen Werkstücke oder Stoffe zuerst wieder ausgegeben werden. Das Trägerband kann ferner aus rohrförmigen Gebilden bestehen, in denen rotationssymmetrische Teile übereinander gestapelt werden.

Letztlich kann die Beschickung und der Austrag von Werkstücken durch aktive Schieber oder Greifer erfolgen. Auch können die Antriebselemente zur Bewegung der Wickel an die Kassette von außen angekoppelt werden.

Bei einer weiteren Ausbildung können die einzelnen Kassetten auch stapelbar ausgeführt werden.

Vorstehend ist die Erfindung anhand von Ausführungsbeispielen ohne Beschränkung des allgemeinen Erfindungsgedankens näher beschrieben worden. Innerhalb des allgemeinen Erfindungsgedankens sind die selbstverständlich die verschiedensten Modifikationen möglich.

Beispielsweise können die einzelnen Behälter oder auch das gesamte Speichersystem, das aus zwei Wickelspeichern und einem Taktvorschub besteht, die eine starre Einheit bilden, geeignete Ausformungen aufweisen, so daß sie mit anderen Wickelspeichern stapelbar sind. Ferner können auch nur die Behälter Stapelbehälter sein. Weiter kann eine geeignete Nummerierung bzw. Codierung (16) einzelnen Speicherplätze vorgenommen werden. Mit einem Codierleser im Taktvorschubbereich kann dann im Reversierbetrieb jeder beliebige Speicherplatz angefahren werden. Auch ist es möglich, die Wickelstrecke auf den Kopf zu stellen, so daß im Ausgabepunkt die Deckplatten das Teil freigeben und es aus dem Speicherplatz durch Schwerkraft herausfallen kann. Ferner können die einzelnen Speicherplätze in Querrichtung zum Trägerband durch feste und/oder in Nuten steckbare Querplatten in ein beliebiges Rastermaß unterteilt werden.

In jedem Falle erhält man jedoch ein universell verwendbares und in seiner Kapzität leicht anpaßbares Speichersystem, das zum Beschicken und Entleeren nur einfachste Bewegungen erfordert und dennoch nahezu 75 % der Speicherkapazität eines quadratischen Behälters aufweist.

## Patentansprüche

1. Speichersystem zum geordneten und positionierten Eingeben, speichern und Entnehmen von Teilen,
mit einem Trägerband (1), das aus einzelnen starren Gliedern besteht, die gelenkig miteinander verbunden sind, und die die zu speichernden Teile aufnehmen,
mit zwei Wellen (31,32), mit denen die Enden des Trägerbandes verbunden sind, und die in wenigstens einem Behälter (21,22) angeordnet sind, und
mit einer Vorschubeinheit, die das Trägerband derart vorschiebt, daß an einer Be- und Entladestation ein neues Teil gespeichert bzw. entnommen werden kann, und das Trägerband zusammen mit den gespeicherten Teilen von der einen Welle ab- und auf die andere Welle aufgewickelt wird,
dadurch **gekennzeichnet,** daß die starren Glieder rohrförmige Elemente aufweisen, die zur Variation der Speicherkapazität über von den rohrförmigen Elementen getrennte Verbindungselemente, wie eine Gurtverbindung oder eine Gelenkverbindung, gelenkig aneinander gefügt sind.

2. Speichersystem nach Anspruch 1,
dadurch **gekennzeichnet,** daß das Trägerband derart ausgebildet ist, daß es das geordnete und vereinzelte Speichern der Teile erlaubt.

3. Speichersystem nach Anspruch 1 oder 2,
dadurch **gekennzeichnet,** daß die Vorschubeinheit ein Taktvorschubelement (43,44;46) mit mindestens einem Eingriffselement aufweist, das zum Transport in komplementär ausgebildete Elemente in dem Trägerband eingreift.

4. Speichersystem nach Anspruch 3,
dadurch **gekennzeichnet,** daß die Eingriffselemente Zapfen (44;49) sind, die in Löcher (13) in dem Trägerband eingreifen.

5. Speichersystem nach Anspruch 3 oder 4,
dadurch **gekennzeichnet,** daß ein schwenkbares Eingriffselement an einem Vorschubschlitten (43) angeordnet ist.

6. Speichersystem nach Anspruch 3 oder 4,
dadurch **gekennzeichnet,** daß die Eingriffselemente an einer drehbaren Trommel (46) angebracht sind.

7. Speichersystem nach einem der Ansprüche 3 bis 6,
dadurch **gekennzeichnet,** daß zusätzlich im Bereich der Beund Entladestation ein Halteelement (45) angeordnet ist, das während des Be- und Entladevorgangs in ein komplementär ausgebildetes Element (13) im Trägerband eingreift.

8. Speichersystem nach einem der Ansprüche 1 bis 7,
dadurch **gekennzeichnet,** daß das Trägerband im Bereich der Be- und Entladestation in Beladerichtung betrachtet konvex gebogen ist.

9. Speichersystem nach Anspruch 8,
dadurch **gekennzeichnet,** daß die drehbare Trommel (46) das Trägerband biegt.

10. Speichersystem nach einem der Ansprüche 1 bis 9,
dadurch **gekennzeichnet,** daß zum Strammen der Wickel wenigstens ein Hilfsantrieb (6) den Wickel, der abgerollt wird, entgegen der Wickelrichtung, und/oder den Wickel, der aufgerollt wird, in Wickelrichtung dreht.

11. Speichersystem nach Anspruch 10,
dadurch **gekennzeichnet,** daß an jeder Welle (31,32) ein Hilfsantrieb (6) vorgesehen ist.

12. Speichersystem nach Anspruch 11,
dadurch **gekennzeichnet,** daß eine Bremse den Wickel, der abgerollt wird, strammt.

13. Speichersystem nach einem der Ansprüche 1 bis 12,
dadurch **gekennzeichnet,** daß Ausrollbänder (4) das Trägerband mit den Wellen verbinden.

14. Speichersystem nach einem der Ansprüche 1 bis 13,
dadurch **gekennzeichnet,** daß die Wellen (31,32) einen spiralförmigen Querschnitt haben, so daß sich ein runder Wickel ergibt.

15. Speichersystem nach einem der Ansprüche 1 bis 14,
dadurch **gekennzeichnet,** daß die Behälter allseitig geschlossen sind.

16. Speichersystem nach einen der Ansprüche 1 bis 15,
dadurch **gekennzeichnet,** daß zwei Behälter vorgesehen sind, von denen jeder eine Welle mit dem zugehörigen Wickel aufnimmt.

17. Speichersystem nach Anspruch 16,
dadurch **gekennzeichnet,** daß die beiden Behälter durch eine Verbindungsplatte lösbar miteinander verbunden sind.

18. Speichersystem nach einem der Ansprüche 1 bis 19,
dadurch **gekennzeichnet,** daß die Behälter stapelbar sind.

19. Speichersystem nach einem der Ansprüche 1 bis 18,
dadurch **gekennzeichnet,** daß jeder Behälter einen Grundteil bestehend aus Wellenstumpf und Lagern für die Wellenstümpfe aufweist, und daß die Länge und Breite der Behälter und der Wellen durch Zwischenelemente variierbar ist.

20. Speichersystem nach einem der Ansprüche 1 bis 15,
dadurch **gekennzeichnet,** daß beide Wellen in einem Behälter angeordnet sind.

21. Speichersystem nach Anspruch 20,
dadurch **gekennzeichnet,** daß das Trägerband aus dem Wickel herausgeführt ist, und daß die Entnahmestation außerhalb des Behälters angeordnet ist.

22. Speichersystem nach Anspruch 20 oder 21,
dadurch **gekennzeichnet,** daß die Wellen zur besseren Ausnutzung des Kassettenvolumens verschiebbar angeordnet sind.

23. Speichersystem nach Anspruch 22,
dadurch **gekennzeichnet,** daß die Lagerpunkte der beiden Wellen an schwenkbaren Elementen angeordnet sind.

24. Speichersystem nach einem der Ansprüche 20 bis 23,
dadurch **gekennzeichnet,** daß zum Be- und Entladen der Behälter als Einheit schwenkbar ist.

25. Speichersystem nach einem der Ansprüche 1 bis 24,
dadurch **gekennzeichnet,** daß das Trägerband eine Codiereinrichtung (16) aufweist.

## Claims

1. Storage system for classified and positioned loading of parts,
comprising a carrier belt (1) consisting of individual rigid elements which are hinged to each other and receive the parts to be stored,
two shafts (31, 32) connected to the ends of said carrier belt, which are disposed in at least one container (21, 22),
a feeding device for advancing said carrier belt in a way so as to allow for storing or removal of a new part at a charging/discharging stain and to unwind the carrier belt together with the stored parts from one shaft and wind it onto the other shaft,
**characterized** in that said rigid elements comprise tubular sections joined to each other by connecting elements separate of said tubular sections, such as a belt or a hinge connection, for varying the storage capacity.

2. Storage system according to Claim 1,
**characterized** in that said carrier belt is designed so as to allow for the classified and separated storage of the parts.

3. Storage system according to Claim 1 or 2,
**characterized** in that said feeding device comprises a timed-feed element (43, 44; 46) having at least one engagement element which engages into complementarily configured elements in said carrier belt for conveying.

4. Storage system according to Claim 3,
**characterized** In that said engagement elements are pins (44; 49) which engage into holes (13) in said carrier belt.

5. Storage system according to Claim 3 or 4,
**characterized** in that a pivotable engagement element is disposed on a feed slide (43).

6. Storage system according to Claim 3 or 4,
**characterized** in that said engagement elements are disposed on a rotatable drum (46).

7. Storage system according to any of Claims 3 to 6,
**characterized** in that additionally a retaining element (45) is provided in the vicinity of the charging and discharging station, which engages into a complementarily designed element (13) in said carrier belt during the charging and discharging operation.

8. Storage system according to any of Claims 1 to 7,
**characterized** in that, seen in the charging direction, said carrier belt presents a convex curvature in the region of said charging and discharging station.

9. Storage system according to Claim 8,
**characterized** in that said rotatable drum (46) bends said carrier belt.

10. Storage system according to any of Claims 1 to 9,
**characterized** in that at least one accessory drive (6) is provided for tightening said coils, which rotates the coil being unwound in opposition to the winding direction, and/or the coil being unwound into the winding direction.

11. Storage system according to Claim 10,
**characterized** in that an accessory drive (6) is provided on each shaft (31, 32).

12. Storage system according to Claim 11,
**characterized** in that a brake tightens the coil being unwound.

13. Storage system according to any of Claims 1 to 12,
**characterized** in that roll-out belts (4) connect said carrier belt to said shafts.

14. Storage system according to any of Claims 1 to 13,
**characterized** in that said shafts (31, 32) present a helical cross-section so that a round coil may be achieved.

15. Storage system according to any of Claims 1 to 14,
**characterized** in that said containers are closed on all sides.

16. Storage system according to any of Claims 1 to 15,
**characterized** in that two containers are provided whereof each accommodates a shaft with the associated coil.

17. Storage system according to Claim 16,
**characterized** in that said two containers are detachably connected to each other by means of a connecting plate.

18. Storage system according to any of Claims 1 to 19,
**characterized** in that said containers are adapted to be stacked.

19. Storage system according to any of Claims 1 to 18,
**characterized** in that each container comprises a base element consisting of a shaft butt and bearings for said shaft butts, and that the length and width of said containers and said shafts may be varied by means of intermediate elements.

20. Storage system according to any of Claims 1 to 15,
**characterized** in that both shafts are disposed in one container.

21. Storage system according to Claim 20,
**characterized** in that said carrier belt is passed out from the coil and that said discharging station is located outside the container.

22. Storage system according to Claim 20 or 21,
**characterized** in that said shafts are disposed for displacement so as to improve the utilization of the storage box volume.

23. Storage system according to Claim 22,
**characterized** in that the bearing points of said two shafts are disposed on pivotable elements.

24. Storage system according to any of Claims 20 to 23,
**characterized** in that the container is adapted to be pivoted as one unit for charging and discharging.

25. Storage system according to any of Claims 1 to 24,
**characterized** in that said carrier belt comprises a coding means (16).

## Revendications

1. Système de stockage pour la mise en stock, le stockage et le prélèvement classé et positionné des pièces,
comprenant une courroie porteuse (1) composée des éléments individuelles rigides articulés l'un à l'autre, qui recoivent les pièces à stocker,
deux arbres (31, 32) reliés aux extrémités de ladite courroie porteuse, qui sont disposés dans au moins un récipient (21, 22),
un dispositif d'avance pour avancer ladite courroie porteuse de façon que le stockage ou le prélèvement d'une autre pièce à stocker soit possible à un poste de chargement/prélèvement, et qu'on puisse dérouler ladite courroie porteuse, ensemble avec des pièces stockées, d'un arbre et l'enrouler sur l'autre arbre,
**caractérisé** en ce que lesdits éléments rigides comprennent des tronçons tubulaires articulés l'un à l'autre par des éléments autres que les tronçons tubulaires, p.e. moyennant d'une liaison par courroie ou un assemblage articulé, pour varier la capacité de stockage.

2. Système de stockage selon la revendication 1,
**caractérisé** en ce que ladite courroie porteuse est conçue pour permettre le stockage classifié et isolé des pièces.

3. Système de stockage selon la revendication 1 ou 2,
**caractérisé** en ce que ladite unité d'avance comprend un élément d'avance à cadence (43, 44; 46) pourvu d'au moins un élément d'engagement qui s'engage, pour le transfert, dans des éléments de forme complémentaire dans ladite courroie porteuse.

4. Système de stockage selon la revendication 3,
**caractérisé** en ce que lesdits éléments d'engagement sont des chevilles (44; 49) qui s'engagent dans des perçages (13) dans ladite courroie porteuse.

5. Système de stockage selon la revendication 3 ou 4,
**caractérisé** en ce qu'un élément d'engagement pivotant est disposé sur un chariot d'avance (43).

6. Système de stockage selon la revendication 3 ou 4,
**caractérisé** en ce que lesdits éléments d'engagement sont disposés sur un tambour tournant (46).

7. Système de stockage selon une quelconque des revendications 3 à 6,
**caractérisé** en ce qu'en plus un élément d'arrêt (45) est dIsposé à proximité du poste de chargement et prélèvement, pour s'engager dans un élément à forme complémentaire (13) ladite courroie porteuse au cours de l'opération de chargement et prélèvement.

8. Système de stockage selon une quelconque des revendication 1 à 7,
**caractérisé** en ce que, vu en sens de chargement, ladite courroie porteuse présente une courbure convexe au voisinage dudit poste de chargement et prélèvement.

9. Système de stockage selon la revendication 8,
**caractérisé** en ce que ledit tambour tournant (46) cintre ladite courroie porteuse.

10. Système de stockage selon une quelconque des revendications 1 à 9,
**caractérisé** en ce qu'au moins un dIspositif de commande auxiliaire (6) est prévu pour raidisser lesdits rouleaux, qui tourne le rouleau en déroulement en opposition au sens d'enroulement, et/ou le rouleau en enroulement au sens d'enroulement.

11. Système de stockage selon la revendication 10,
**caractérisé** en ce qu'une unité d'entraînement auxiliaire (6) est prévue sur chaque arbre (31, 32).

12. Système de stockage selon la revendication 11,
**caractérisé** en ce qu'un dispositif de freinage raidisse le rouleau en déroulement.

13. Système de stockage selon une quelconque des revendications 1 à 12,
**caractérisé** en ce que des bandes de déroulement (4) relient ladite courroie porteuse auxdits arbres.

14. Système de stockage selon une quelconque des revendications 1 à 13,
**caractérisé** en ce que lesdits arbres (31, 32) présentent une section hélicoïdale de manière qu'on puisse achever un rouleau rond.

15. Système de stockage selon une quelconque des revendications 1 à 14,
**caractérisé** en ce que lesdits récipients ou bacs sont chambrés.

16. Système de stockage selon une quelconque des revendications 1 à 15,
**caractérisé** en ce que deux bacs sont prévus, dont chacun reçoit un arbre ensemble avec le rouleau y appartenant.

17. Système de stockage selon la revendication 16,
**caractérisé** en ce que lesdits deux bacs sont reliés l'un à l'autre pour être démontable, moyennant d'une plaque d'assemblage.

18. Système de stockage selon une quelconque des revendications 1 à 19,
**caractérisé** en ce que lesdits bacs sont propres à être empilés l'un sur l'autre.

19. Système de stockage selon une quelconque des revendications 1 à 18,
**caractérisé** en ce que chaque bac comprend un élément de base composé d'un bout d'arbre et des paliers pour lesdits bouts d'arbre, et en ce que la longueur et la largeur desdits bacs et desdits arbres peut être modifiée moyennant des éléments intermédiaires.

20. Système de stockage selon une quelconque des revendications 1 à 15,
**caractérisé** en ce que les deux arbres sont disposé à l'intérieur d'un même bac.

21. Système de stockage selon la revendication 20,
**caractérisé** en ce que ladite courroie porteuse est extraite dudit rouleau, et en ce que ledit poste de prélèvement se trouve à l'extérieur du bac.

22. Système de stockage selon la revendication 20 ou 21,
**caractérisé** en ce que lesdits arbres sont dIsposés à être déplacés pour améliorer l'utilisation du volume dudit bac de stockage.

23. Système de stockage selon la revendication 22,
**caractérisé** en ce que les points de logement desdits deux arbres sont disposés sur des éléments pivotants.

24. Système de stockage selon une quelconque des revendications 20 à 23,
**caractérisé** en ce que ledit bac est approprié à être articulé en tant qu'une seule unité pour le chargement et le prélèvement.

25. Système de stockage selon une quelconque des revendications 1 à 24,
**caractérisé** en ce que ladite courroie porteuse comprend des moyens de codage (16).
